# EUROPÄISCHE PATENTSCHRIFT

(11) **EP 3 484 705 B1**
(45) Veröffentlichungstag und Bekanntmachung des Hinweises auf die Patenterteilung: **04.03.2026**
(21) Anmeldenummer: 17725532.0
(22) Anmeldetag: 05.05.2017
(51) Int. Cl.: B32B 17/10

(54) **VERBUNDSCHEIBE MIT EINER MEHRLAGIGEN VERBUNDSCHICHT UND VERFAHREN ZU IHRER HERSTELLUNG**
COMPOUND GLAZING WITH A MULTILAYER COMPOSITE LAYER AND METHOD FOR THEIR PREPARATION
VITRE COMPOSITE MULTICOUCHES COMPOSITES ET SON PROCEDE DE FABRICATION

(30) Priorität: 13.07.2016 EP 16179144
(43) Veröffentlichungstag der Anmeldung: 22.05.2019
(73) Patentinhaber: Saint-Gobain Sekurit France, 60150 Thourotte (FR)
(72) Erfinder: MANZ, Florian, 52064 Aachen (DE); VAN DER MEULEN, Uwe, 52385 Nideggen (DE); KREBS, Benjamin, 44797 Bochum (DE); PLAHL, Sabrina, 52146 Würselen (DE); GILLESSEN, Stephan, 52477 Alsdorf (DE)
(74) Vertreter: SGR Germany-Patents
(86) Internationale Anmeldenummer: PCT/EP2017/060781
(87) Internationale Veröffentlichungsnummer: WO 2018/010865

(56) Entgegenhaltungen:
- WO-A1-2014/174310
- DE-C1- 19 622 566

## Beschreibung

### Gebiet der Erfindung

Die vorliegende Erfindung betrifft eine Verbundscheibe mit einer mehrlagigen Verbundschicht.

Außerdem betrifft die vorliegende Erfindung ein Verfahren zur Herstellung der Verbundscheibe mit einer mehrlagigen Verbundschicht.

Nicht zuletzt betrifft die vorliegende Erfindung die Verwendung der Verbundscheibe mit einer mehrlagigen Verbundschicht.

### Stand der Technik

Der in der vorliegenden Anmeldung zitierte Stand der Technik wird durch Bezugnahme Bestandteil der Anmeldung.

Aus der deutschen Patentanmeldung DE 10 2012 219 950 A1 ist eine laminierte Scheibenanordnung bekannt, die eine äußere Glasplatte, die eine Außenfläche und eine gegenüberliegende erste Laminatfläche definiert; eine innere Glasplatte, die eine Innenfläche und eine gegenüberliegende zweite Laminatfläche definiert; eine erste Polyvinylbutyral (PVB)-Schicht, die benachbart zu der ersten Laminatfläche angeordnet ist; eine zweite PVB-Schicht, die benachbart zu der zweiten Laminatfläche angeordnet ist; und eine Polyethylenterephthalat (PET)-Schicht, die zwischen der ersten PVB-Schicht und der zweiten PVB-Schicht angeordnet ist.

In DE 196 22 566 C1 wird ein Verfahren zur Herstellung einer IR-reflektierenden Verbundglasscheibe für Kraftfahrzeuge offenbart, wobei eine mit einer Funktionsschicht aus Silber versehene Trägerfolie zwischen zwei thermoplastischen Klebefolien eingelegt wird. Aus WO 2014/174310 A1 ist eine Verbundscheibe bekannt, die eine Trägerfolie mit einer infrarotreflektierenden Beschichtung, ein elektrisch schaltbares Funktionselement zwei Klebefolien und eine Maskierungsschicht im Randbereich umfasst, wobei die Klebefolien voneinander unterschiedliche Dicken aufweisen können.

Die Außenkante der PET-Schicht und die Außenkanten der PVB-Schichten bilden eine gemeinsame Außenkante, so dass die Kante der PET-Schicht nicht gegen die Umgebung abgeschirmt ist. Trägt die PET-Schicht Funktionsschichten, beispielsweise eine elektrisch leitfähige Schicht, so sind diese häufig korrosionsanfällig, was die laminierte Scheibenanordnung in ihrer Funktion stark beeinträchtigt. Außerdem zeigen solche PVB-PET-PVB-Schichtanordnungen häufig eine starke Orangenhaut und Innenfehler. Als Orangenhaut bezeichnet der Fachmann in diesem Zusammenhang eine unerwünscht hohe Oberflächenrauigkeit der Schichtanordnung, die auch im fertigen Endprodukt sichtbar ist und vom Kunden allgemein als störend empfunden wird. Unter dem Begriff "Innenfehler" versteht der Fachmann die verschiedensten weiteren im Laminat auftretenden optisch störenden Fehlstellen und Fremdkörpereinschlüsse. Dazu zählen unter anderem Haareinschlüsse, beim Folienzuschnitt verbleibende Reststücke der Folien, sowie im Produktionsprozess auftretende Beschädigungen durch Fingerabdrücke oder Speichel, die eine Korrosion metallischer Beschichtungen im Folienstapel begünstigen. Darüber hinaus ist es schwierig die PET-Schicht beim Laminieren durch die verhältnismäßig dicke PVB-Schicht zu schützen. Des Weiteren lässt sich die PET-PVB-Schichtanordnung schlecht von der zweiten PVB-Schicht abziehen, so dass ein Rückschnitt der PET-PVB- Schichtanordnung - wenn überhaupt - nur schlecht möglich ist und zu sichtbaren Störungen führt.

Der vorliegenden Erfindung lag demnach die Aufgabe zu Grunde eine Verbundscheibe vorzuschlagen, die die besagten Nachteile des Standes der Technik nicht aufweist.

Insbesondere sollte die Außenkante der PET-Schicht und die Außenkanten der PVB-Schichten keine gemeinsame Außenkante mehr bilden, so dass die Kante der PET-Schicht gegen die Umgebung abgeschirmt war. Trug die PET-Schicht Funktionsschichten, beispielsweise eine elektrisch leitfähige Schicht, so sollten diese nicht mehr korrosionsanfällig sein, so dass die laminierte Scheibenanordnung in ihrer Funktion nicht mehr beeinträchtigt wurde. Außerdem sollten die PVB-PET-PVB-Schichtanordnungen keine Orangenhaut und Innenfehler mehr zeigen. Darüber hinaus sollte es möglich sein, die PET-Schicht beim Laminieren durch eine verhältnismäßig dünne PVB-Schicht zu schützen. Des Weiteren sollte sich die PET-PVB-Schichtanordnung sehr gut von der zweiten PVB-Schicht abziehen lassen, so dass ein Rückschnitt der PET-PVB- Schichtanordnung sehr gut möglich war und so zu keinen sichtbaren Störungen mehr führte.

Nicht zuletzt war es die Aufgabe der vorliegenden Erfindung, ein Verfahren bereitzustellen, mit dem sich die Verbundscheiben rasch, problemlos, störungsfrei und hervorragend reproduzierbar herstellen ließen.

Diese und weitere Aufgaben werden nach dem Vorschlag der Erfindung durch die Verbundscheibe und das Verfahren zu ihrer Herstellung mit den Merkmalen der unabhängigen Patentansprüche gelöst. Vorteilhafte Ausgestaltungen der Erfindung sind durch die Merkmale der Unteransprüche gegeben.

### Ausführliche Beschreibung der Erfindung

Die Erfindung betrifft eine Verbundscheibe, insbesondere eine Verbundscheibe zur Anwendung im Automobilbereich. Bevorzugt ist die Scheibe transparent, weist also eine Transmission im sichtbaren Spektralbereich von größer als 0 % auf. Die Erfindung ist dabei sowohl auf Scheiben im Durchsichtbereich, zum Beispiel Windschutzscheiben, Seitenscheiben und Heckscheiben, als auch für Scheiben mit geringer Transparenz, beispielsweise Dachscheiben, geeignet.

Die Verbundscheibe weist mindestens eine, insbesondere eine, mehrlagige Verbundschicht zwischen mindestens einer, insbesondere einer Außenscheibe und mindestens einer, insbesondere einer, Innenscheibe auf.

Die mindestens eine, insbesondere eine mehrlagige Verbundschicht ist ein Laminat, das mindestens eine, insbesondere eine, an der Innenseite der mindestens einen Außenscheibe haftende erste thermoplastische Folie aufweist.

Das Laminat weist des Weiteren an der der Innenseite der Außenscheibe gegenüberliegenden Oberfläche der mindestens einen thermoplastischen Folie mindestens eine, insbesondere eine, Polyesterfolie auf.

Außerdem weist das Laminat mindestens eine, insbesondere eine, zwischen der mindestens einen Polyesterfolie und der der Innenseite der Außenscheibe gegenüberliegenden Oberseite der Innenscheibe platzierte, zweite thermoplastische Folie auf.

In dem Laminat sind die Dickenverhältnisse der Folien wie folgt eingestellt:
- (Erste thermoplastische Folie):( Polyesterfolie) = (1:5) bis (5:1), bevorzugt (1:2,5) bis (2,5:1), insbesondere (1:1); und
- (zweite thermoplastische Folie):[(erste thermoplastische Folie) + (Polyesterfolie)] = (25:1) bis (2:1), bevorzugt (9:1) bis (2,5:1) , insbesondere (4:1).

Die Dicken der thermoplastischen Folien und der Polyesterfolie können breit variieren und daher hervorragend den Erfordernissen des Einzelfalls angepasst werden. Vorzugsweise ist die erste thermoplastische Folie 20 µm bis 200 µm, bevorzugt 40 µm bis 110 µm, insbesondere 40 µm bis 60 µm oder 90 µm bis 110 µm dick. Vorzugsweise ist Polyesterfolie 10 µm bis 130 µm, bevorzugt 20 µm bis 60 µm, insbesondere 40 µm bis 60 µm dick. Vorzugsweise ist die zweite thermoplastische Folie 150 µm bis 1000 µm, bevorzugt 350 µm bis 850 µm und insbesondere 370 µm bis510 µm oder 750 µm bis 845 µm dick.

Die mindestens eine erste thermoplastische Folie und die mindestens eine Polyesterfolie haben eine gemeinsame Kante, die im Abstand A parallel oder im Wesentlichen parallel zum Rand der mindestens einen zweiten thermoplastischen Folie verläuft.

»Im Wesentlichen« bedeutet hier und im Folgenden, dass die betreffende Eigenschaft oder der betreffende Wert von dem exakten Wert oder der Eigenschaft abweichen kann, aber nur in einem Maße, dass die betreffende Funktion, die durch den Wert oder die Eigenschaft definiert wird, nicht gestört oder geschädigt wird.

Der Abstand A kann breit variieren und daher den Erfordernissen des Einzelfalls hervorragend angepasst werden. Vorzugsweise liegt der Abstand A zwischen 1 mm und 400 mm, besonders bevorzugt 5 mm bis 250 mm.

Das Material der mindestens einen zweiten thermoplastischen Folie füllt den Raum zwischen der besagten gemeinsamen Kante, der Innenseite der mindestens einen Außenscheibe und dem im Abstand A zur gemeinsamen Kante befindlichen Rand der mindestens einen zweiten thermoplastischen Folie aus und verschmilzt im Laminationsprozess mit dem Material der mindestens einen ersten thermoplastischen Folie, so dass die gemeinsame Kante von der Umgebung der Verbundscheibe isoliert ist.

Die erfindungsgemäße Verbundscheibe ist bevorzugt transparent, wobei die Transmission der Scheibe im sichtbaren Spektralbereich bei größer als 0 % liegt. Für Scheiben im Durchsichtbereich einer Fahrzeugverglasung gelten gesetzliche Mindestanforderungen an die Transmission im sichtbaren Spektralbereich. Bei Windschutzscheiben ist hier beispielsweise eine Transmission von mindestens 70 % in den Vorschriften ECE-R43, ANSI Z 26.1 und CCC /CNCA-04 vorgeschrieben. Eine bevorzugte Ausführungsform der Erfindung ist eine Windschutzscheibe entsprechend dieser Anforderung. Mittels des erfindungsgemäßen Laminataufbaus können die im Produktionsprozess auftretenden Innenfehler sowie die nach Lamination optisch erkennbare Oberflächenrauigkeit ("Orangenhaut") minimiert werden. Eine unerwünscht hohe Oberflächenrauigkeit fällt dem Betrachter jedoch besonders bei Scheiben mit geringer Transmission negativ auf. Eine vorteilhafte Ausführungsform der erfindungsgemäßen Verbundscheibe ist eine Heckscheibe oder Dachscheibe. Im modernen Fahrzeugbau sind großflächige Dachverglasungen ein häufig verwendetes Designmerkmal. Um dabei eine zu starke Aufheizung des Fahrzeuginnenraums zu vermeiden, sind diese Scheiben in der Regel abgedunkelt oder über dem Fachmann bekannte schaltbare Elemente im Schichtstapel abdunkelbar. Selbst nur im abgedunkelten Zustand erkennbare optische Inhomogenitäten der Verbundscheibe werden dabei vom Kunden als Qualitätsmangel empfunden. Diese werden mittels des erfindungsgemäßen Schichtaufbaus der Verbundscheibe minimiert beziehungsweise beseitigt.

In einer bevorzugten Ausführungsform weist die erfindungsgemäße Verbundscheibe eine Transmission von 0,5 % bis 50 %, bevorzugt 3 % bis 30 %, besonders bevorzugt 5 % bis 27 %, im sichtbaren Spektralbereich des Lichtes auf. Vorzugsweise handelt es sich dabei um eine Heckscheibe oder Dachscheibe, insbesondere eine Fahrzeugdachscheibe.

Die mindestens eine Außenscheibe und/oder die mindestens eine Innenscheibe ist oder sind aus einem Material aufgebaut, das aus Glas und/oder mindestens einem Kunststoff, insbesondere einem klaren, starren Kunststoff aufgebaut ist oder hieraus besteht.

Vorzugsweise wird das Glas aus der Gruppe, bestehend aus Flachglas, Floatglas, Quarzglas, Borosilikatglas und Kalk-Natron-Glas, ausgewählt.

Vorzugsweise wird der klare, starre Kunststoff aus der Gruppe, bestehend aus Polycarbonat und Polymethylmethacrylat ausgewählt.

Die Dicke der mindestens einen Außenscheibe und/oder der mindestens einen Innenscheibe kann breit variieren und so hervorragend den Erfordernissen des Einzelfalls angepasst werden. Vorzugsweise werden Scheiben mit den Standardstärken von 0,3 mm bis 25 mm, bevorzugt von 1,2 mm bis 3,5 mm für Fahrzeugglas verwendet.

Die Größe der mindestens einen Außenscheibe und/oder der mindestens einen Innenscheibe kann ebenfalls breit variieren und richtet sich nach der Größe der erfindungsgemäßen Verbundscheibe. Beispielsweise können sie die im Fahrzeugbau und Architekturbereich üblichen Flächen von 200 cm² bis zu 20 m² aufweisen.

Die mindestens eine Außenscheibe und die mindestens eine Innenscheibe können einen beliebigen Umriss haben. So können sie dreieckig, viereckig, rautenförmig, trapezförmig fünfeckig oder sechseckig gegebenenfalls mit abgerundeten Ecken, rund, oval, elliptisch oder nierenförmig gegebenenfalls mit abgerundeten Kanten sein.

Die mindestens eine Außenscheibe und/oder die mindestens eine Innenscheibe können eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt sind die Scheiben planar oder leicht oder stark in einer Richtung oder in mehreren Richtungen des Raumes gebogen. Insbesondere werden planare oder im Wesentlichen planare Scheiben verwendet. Die Scheiben können farblos oder gefärbt sein und/oder IR- und/oder UV-Strahlung absorbierende Pigmente enthalten. Aus optischen Gründen können leicht getönte Außenscheiben eingesetzt werden, wodurch der TTS (vgl. DIN EN ISO 13837 Wärme) leicht sinkt.

Die mindestens eine Polyesterfolie der mindestens einen Verbundschicht ist eine Polyethylenterephthalatfolie (PET).

Die mindestens eine erste und mindestens eine zweite thermoplastische Folie sind aus Polyvinylbutyral (PVB), aufgebaut oder sie bestehen aus diesem.

Die mindestens eine erste PVB-Folie ist frei oder im Wesentlichen frei von Weichmachern.

Die erste und/oder die zweite thermoplastische Folie können gefärbt sein, wobei die Farbe und Helligkeit in weiten Grenzen frei gewählt werden können. Die zweite thermoplastische Folie kann UV-Strahlung und/oder IR-Strahlung absorbieren.

Zwischen der mindestens einen ersten thermoplastischen Folie und der Polyesterfolie und/oder zwischen der Polyesterfolie und der zweiten thermoplastischen Folie kann mindestens eine Funktionsschicht angeordnet sein. Diese mindestens eine Funktionsschicht kann Radio-, IR- und/oder UV-Strahlung absorbieren und/oder elektrisch leitfähig und/oder gefärbt sein. Beispielsweise kann sie als Scheibenheizung fungieren.

In einer bevorzugten Ausführungsform ist eine elektrisch leitfähige Funktionsschicht auf der Polyesterfolie aufgebracht, beispielsweise mittels physikalischer Gasphasenabscheidung oder anderer dem Fachmann bekannter Prozesse. Die elektrisch leitfähige Funktionsschicht weist eine starke Absorption im infraroten Bereich des Lichtspektrums auf und verhindert dadurch eine Aufheizung des dahinter liegenden Innenraums. Solche Schichten werden üblicherweise als sogenannte IR-Schichten bezeichnet und sind dem Fachmann geläufig. Optional können diese Schichten ebenfalls zur Beheizung der Scheibe genutzt werden.

Zwischen der zweiten thermoplastischen Folie und der Innenscheibe können weitere Folien zum Einsatz kommen, wie zum Beispiel schaltbare Elemente auf der Basis von Flüssigkristallen, suspendierten Partikeln oder elektrochromen Schichtaufbauten.

In einer möglichen Ausführungsform sind in der Verbundscheibe angebrachte schaltbare Elemente auch unmittelbar über, in der Verbundscheibe einlaminierte, Sensoren bedienbar.

Die Verbundscheibe kann in einer möglichen Ausführungsform auch schalldämpfende Eigenschaften aufweisen. Bevorzugt werden dazu akustisch dämpfende thermoplastische Folien verwendet.

Die Verbundscheibe kann mithilfe unterschiedlicher Verfahren des Standes der Technik hergestellt werden. Bevorzugt wird sie aber mithilfe des erfindungsgemäßen Verfahrens hergestellt.

Das erfindungsgemäße Verfahren ist durch die folgenden Verfahrensschritte gekennzeichnet:
(a) Bereitstellen mindestens einer, insbesondere einer, Innenscheibe mit einer Oberseite,
(b) Bedecken der Oberseite mit mindestens einer, insbesondere einer, zweiten thermoplastischen Folie bis zum Randbereich der späteren erfindungsgemäßen Verbundscheibe,
(c) vollständiges Bedecken der der Oberfläche gegenüberliegenden Oberfläche der mindestens einen zweiten thermoplastischen Folie mit mindestens einer, insbesondere einer, Polyesterfolie,
(d) vollständiges Bedecken der freien Oberfläche der mindestens einen Polyesterfolie mit mindestens einer, insbesondere einer, ersten thermoplastischen Folie,
(e) Einschneiden der ersten thermoplastischen Folie und der Polyesterfolie mit einer Schneidevorrichtung, vorzugsweise einem Laser oder einem Diamantmesser, im Abstand A zum Rand der mindestens einen zweiten thermoplastischen Folie,
(f) Entfernen des Folienstreifens aus der mindestens ersten thermoplastischen Folie und der Polyesterfolie, so dass diese beiden Folien eine gemeinsame Kante bilden und eine freie horizontale Oberfläche der Breite A der mindestens einen zweiten thermoplastischen Folie freigelegt wird, und
(g) Aufpressen der mindestens einen, insbesondere einen, Außenscheibe mit einem Druck D, wobei die Innenseite der mindestens einen Außenscheibe mit der Oberseite der mindestens einen ersten thermoplastischen Folie in Kontakt kommt und wobei der freie Raum zwischen der gemeinsamen Kante, der Innenseite und der freien Oberfläche der mindestens einen zweiten thermoplastischen Folie durch Einfließen des Materials der mindestens einen zweiten thermoplastischen Folie in Richtung der gemeinsamen Kante und der Innenseite aufgefüllt wird und die Verbundscheibe resultiert.

Das Einschneiden der ersten thermoplastischen Folie und der Polyesterfolie in Schritt (e) erfolgt senkrecht zur Oberfläche der ersten thermoplastischen Folie.

In einer bevorzugten Ausführungsform erfolgt das Aufpressen (g) bei höheren Temperaturen und unter Vakuum. Geeignete Vorrichtungen hierfür, wie z.B. Vakuumsäcke, sind üblich und bekannt und brauchen hier nicht näher erläutert zu werden. Bevorzugt erfolgt die Lamination im Autoklavverfahren.

Die erfindungsgemäße Verbundscheibe, insbesondere die mithilfe des erfindungsgemäßen Verfahrens hergestellte erfindungsgemäße Verbundscheibe, kann hervorragend als bewegliches und unbewegliches funktionales und/oder dekoratives Einzelstück und/oder als Einbauteil in Möbeln, Geräten und Gebäuden sowie in Fortbewegungsmitteln zur Fortbewegung auf dem Lande, in der Luft oder zu Wasser, wie Flugzeuge, Schiffe, Züge und Kraftfahrzeuge, insbesondere aber in Kraftfahrzeugen, beispielsweise als Windschutzscheibe, Heckscheibe und Seitenscheibe und/oder Glasdach, insbesondere aber als Dachverglasung, verwendet werden.

Es versteht sich, dass die vorstehend genannten und nachstehend näher erläuterten Merkmale nicht nur in den angegebenen Kombinationen und Konfigurationen, sondern auch in anderen Kombinationen und Konfigurationen oder in Alleinstellung einsetzbar sind, ohne den Rahmen der vorliegenden Erfindung zu verlassen.

### Kurze Beschreibung der Figuren

Die Erfindung wird nun anhand von Ausführungsbeispielen näher erläutert, wobei Bezug auf die beigefügten Figuren genommen wird. Es zeigen in vereinfachter, in nicht maßstäblicher Darstellung:
- Figur 1: einen vertikalen Längsschnitt durch den Randbereich 1.3 der Verbundscheibe 1;
- Figur 2: einen vertikalen Längsschnitt durch den Randbereich 1.3 einer Zwischenstufe 1a bei der Herstellung der Verbundscheibe 1;
- Figur 3: einen vertikalen Längsschnitt durch den Randbereich 1.3 einer Zwischenstufe 1b bei der Herstellung der Verbundscheibe 1;
- Figur 3a: eine Draufsicht auf die Zwischenstufe 1b bei der Herstellung der Verbundscheibe 1
- Figur 4: einen vertikalen Längsschnitt durch den Randbereich 1.3 einer Zwischenstufe 1c bei der Herstellung der Verbundscheibe 1.

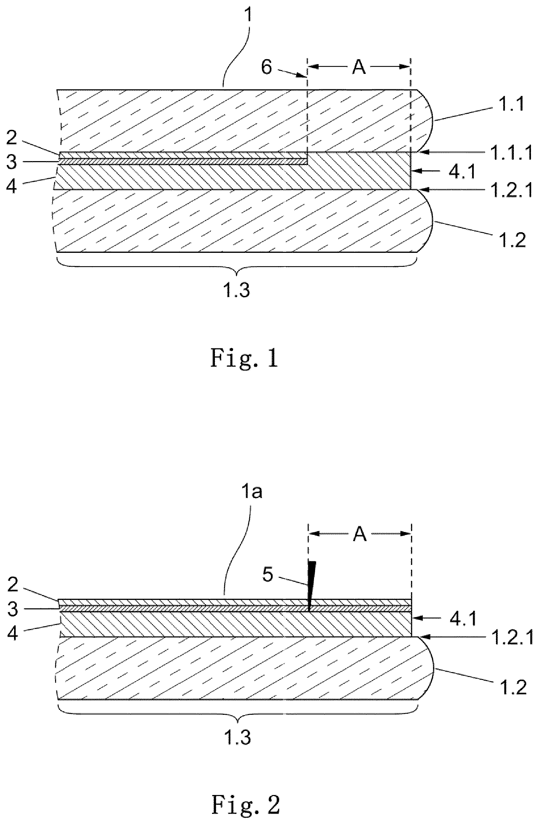

In den Figuren 1 bis 4 haben die Bezugszeichen die folgende Bedeutung:
- 1: Verbundscheibe mit mehrlagiger Verbundschicht
- 1a, 1b, 1c: Zwischenstufen bei der Herstellung der Verbundscheibe 1

- 1.1: Außenscheibe der Verbundscheibe 1
- 1.1.1: Innenseite der Außenscheibe 1.1
- 1.2: Innenscheibe der Verbundscheibe 1
- 1.2.1: Oberseite der Innenscheibe 1.2
- 1.3: Randbereich der Verbundscheibe 1
- 2: 20 µm bis 200 µm dicke thermoplastische Folie
- 3: 10 µm bis 130 µm dicke Polyesterfolie
- 4: 150 µm bis 1000 µm dicke thermoplastische Folie
- 4.1: Rand der thermoplastischen Folie 4
- 4.2: freie horizontale Oberfläche der thermoplastischen Folie 4
- 5: Schneidevorrichtung
- 6: gemeinsamer Rand der thermoplastischen Folie 2 und der Polyesterfolie 3
- 7: Fließrichtung des Materials der thermoplastischen Folie 4
- A: Abstand des gemeinsamen Randes 6 von dem Rand 4.1 der thermoplastischen Folie 4
- D: Anpressdruck

### Ausführliche Beschrecibung der Figuren

### Figur 1

Die Figur 1 zeigt einen vertikalen Längsschnitt durch den Randbereich 1.3 der Verbundscheibe 1.

Die Verbundscheibe 1 wurde gebildet durch eine Außenscheibe 1.1 aus gespanntem Floatglas mit einer Dicke von 2,1 mm. Die Kanten der Außenscheibe 1.1 waren abgerundet. Die Außenscheibe 1.1 wies eine Innenseite 1.1.1 auf, die der mehrlagigen Verbundschicht 2,3,4 zugeordnet war.

Außerdem wurde die Verbundscheibe 1 durch eine Innenscheibe 1.2 derselben Zusammensetzung und Abmessungen gebildet. Die Kanten der Innenscheibe 1.2 waren ebenfalls abgerundet. Die Innenscheibe 1.2 wies eine Oberseite 1.2.1 auf, die der mehrlagigen Verbundschicht 2,3,4 zugeordnet war.

Die Innenseite 1.1.1 der Außenscheibe 1.1 stand in direktem Kontakt mit einer 50 µm dicken, weichmacherfreien PVB-Folie 2. Diese war unterlegt mit einer 50 µm dicken PET-Folie 3. Die PVB-Folie 2 und die PET-Folie 3 wiesen eine gemeinsame Kante 6 auf, die sich in einem Abstand A = 1 cm von dem Rand 4.1 der unterlegten 380 µm dicken PVB-Folie 4 befand. Die PVB-Folie 4 lag der Oberseite 1.2.1 der Innenscheibe 1.2 auf. Das Material der PVB-Folie 4 füllte den Raum zwischen der Kante 6 und der Innenseite 1.1.1 der Außenscheibe 1.1 auf dem Abstand A vollständig aus. Dadurch war die gemeinsame Kante 6 der PVB-Folie 2 und der PET-Folie 3 vollständig von der Umgebung der Verbundscheibe 1 isoliert. Trug somit die PET-Folie 3 Funktionsschichten, beispielsweise eine elektrisch leitfähige Schicht, so waren diese nicht mehr korrosionsanfällig, so dass die laminierte Scheibenanordnung in ihrer Funktion nicht mehr beeinträchtigt war. Außerdem zeigten die PVB-PET-PVB-Schichtanordnungen 2,3,4 keine Orangenhaut und Innenfehler. Darüber hinaus war es möglich, die PET-Folie 3 beim Laminieren durch die verhältnismäßig dünne PVB-Folie 2 zu schützen. Des Weiteren ließ sich die PET-PVB-Schichtanordnung 2,3 sehr gut von der zweiten PVB-Folie 4 abziehen, so dass ein Rückschnitt der PET-PVB-Schichtanordnung 2,3 sehr gut möglich war und so zu keinen sichtbaren Störungen mehr führte.

### Figuren 2 bis 4

Die Figuren 2, 3 und 4 zeigen schematisch die Herstellung der Verbundscheibe 1 anhand von vertikalen Längsschnitten der Randbereiche 1.3.

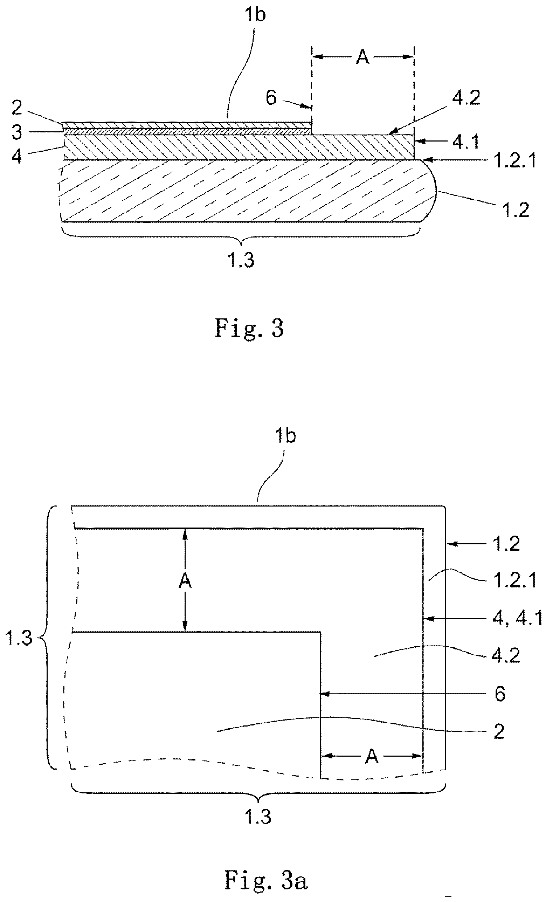

Die Figur 3a zeigt zur Verdeutlichung des Verfahrens die Draufsicht auf die Zwischenstufe 1b bei der Herstellung der Verbundscheibe 1.

Es wurden die bei Figur 1 näher erläuterten Materialien und Abmessungen verwendet.

### Figur 2: Zwischenstufe 1a

Auf die Oberseite 1.2.1 der Innenscheibe 1.2 wurde die PVB-Folie 4 laminiert. Anschließend wurden auf die freie Oberseite der PVB-Folie 4 die PET-Folie 3 und die PVB-Folie 2 laminiert, so dass die Zwischenstufe 1a resultierte.

### Figur 3: Zwischenstufe 1b

Zur Herstellung der Zwischenstufe 1b wurde die Zwischenstufe 1a mit einem Diamantmesser 5 (in Figur 2 gezeigt) in dem Abstand A zur Kante 4.1 der PVB-Folie 4 bis zur Oberfläche der PVB-Folie eingeschnitten. Das abgeschnittene PVB-PET-Folienstück 2,3 wurde entfernt, ohne dass die nun freigelegte, freie, horizontale Oberfläche 4.2 der PVB-Folie 4 beschädigt wurde. Die PVB-Folie-2 und die PET-Folie 3 bildeten nun eine gemeinsame Kante 6 im Abstand A zur Kante 4.1 der PVB-Folie 4.

Diese Anordnung wird noch einmal anhand der Figur 3a veranschaulicht.

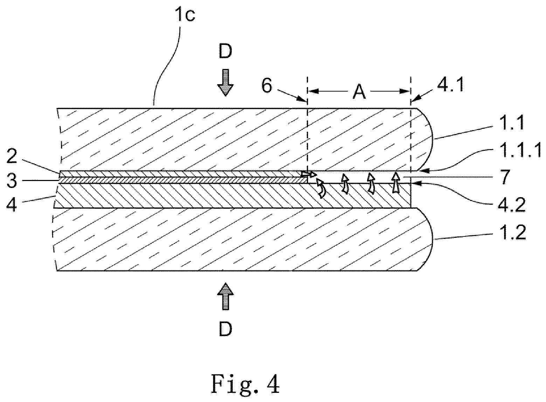

### Figur 4: Zwischenstufe 1c

Auf die Anordnung der Zwischenstufe 1b gemäß den Figuren 3 und 3a wurde die Außenscheibe 1.1 mit der Innenseite 1.1.1 aufgelegt, so dass sie in Kontakt mit der PVB-Folie 2 kam. Anschließend wurde die gesamte Anordnung in der Hitze und unter Vakuum mit dem Druck D in einem Vakuumsack zusammengepresst. Dabei füllte sich der Hohlraum zwischen der gemeinsamen Kante 6, der freien Oberfläche 4.2 und der Innenseite 1.1.1 der Außenscheibe 1.1 auf, indem das Material der PVB-Folie 4 in der Fließrichtung 7 in den Hohlraum floss und mit dem Material der PVB-Folie 2 verschmolz. Nach dem Abkühlen, der Entspannung des Drucks D und dem Einlassen von Luft in den Vakuumsack resultierte die erfindungsgemäße Verbundscheibe 1 mit den bei der Figur 1 geschilderten vorteilhaften Eigenschaften.

## Patentansprüche

1. Verbundscheibe (1) mit mindestens einer mehrlagigen Verbundschicht (2,3,4) zwischen mindestens einer Außenscheibe (1.1) und mindestens einer Innenscheibe (1.2), **dadurch gekennzeichnet, dass** die mindestens eine mehrlagige Verbundschicht (2,3,4) ein Laminat ist, umfassend
- mindestens eine an der Innenseite (1.1.1) der mindestens einen Außenscheibe (1.1) haftende, thermoplastische Folie (2),
- mindestens eine an der der Innenseite (1.1.1) der mindestens einen Außenscheibe (1.1) gegenüberliegenden Oberfläche der mindestens einen thermoplastischen Folie (2) haftende Polyesterfolie (3),
- mindestens eine zwischen der mindestens einen Polyesterfolie (3) und der der Innenseite (1.1.1) der mindestens einen Außenscheibe (1.1) gegenüberliegenden Oberseite (1.2.1) der mindestens einen Innenscheibe (1.2) platzierte thermoplastische Folie (4), wobei
- die Dickenverhältnisse der Folien (2), (3) und (4) wie folgt eingestellt sind:
- (2):(3) = (1:5) bis (5:1) und
- (4):[(2) + (3)] = (25:1) bis (2:1),
- die mindestens eine thermoplastische Folie (2) und die mindestens eine Polyesterfolie (3) eine gemeinsame Kante (6) haben, die im Abstand A parallel oder im Wesentlichen parallel zu dem Rand (4.1) der mindestens einen thermoplastischen Folie (4) verläuft,
- das Material der mindestens einen thermoplastischen Folie (4) den Raum zwischen der Kante (6), der Innenseite (1.1.1) der Außenscheibe (1.1) und dem im Abstand A zu (6) befindlichen Rand (4.1) von (4) in der Richtung (7) ausfüllt und mit dem Material der mindestens einen thermoplastischen Folie (2) verschmolzen ist, so dass (6) von der Umgebung der Verbundscheibe (1) isoliert ist,
- die mindestens eine thermoplastische Folie (2) und die mindestens eine thermoplastische Folie (4) aus Polyvinylbutyral (PVB) aufgebaut sind,
- die mindestens eine Polyesterfolie (3) eine Polyethylenterephthalatfolie (PET) ist und
- die mindestens eine PVB-Folie (2) frei oder im Wesentlichen frei von Weichmachern ist.

2. Verbundscheibe (1) nach Anspruch 1, **dadurch gekennzeichnet, dass** die mindestens eine thermoplastische Folie (2) 20 µm bis 200 µm dick ist, die mindestens eine Polyesterfolie (3) 10 µm bis 130 µm dick ist und die mindestens eine thermoplastische Folie (4) 150 µm bis 1000 µm dick ist.

3. Verbundscheibe (1) nach Anspruch 1 oder 2, **dadurch gekennzeichnet, dass** die mindestens eine Außenscheibe (1.1) und/oder die mindestens eine Innenscheibe (1.2) aus einem Material, ausgewählt aus der Gruppe, bestehend aus Flachglas, Floatglas, Quarzglas, Borosilikatglas, Kalk-Natron-Glas, Polycarbonat und Polymethylmethacrylat, aufgebaut ist oder sind oder dass sie hieraus bestehen.

4. Verbundscheibe (1) nach einem der Ansprüche 1 bis 3, **dadurch gekennzeichnet, dass** die mindestens eine erste thermoplastische Folie (2) 40 µm bis 110 µm dick ist.

5. Verbundscheibe (1) nach einem der Ansprüche 1 bis 4, **dadurch gekennzeichnet, dass** die mindestens eine Polyesterfolie (3) 10 µm bis 130 µm dick ist.

6. Verbundscheibe (1) nach einem der Ansprüche 1 bis 5, **dadurch gekennzeichnet, dass** zwischen der mindestens einen thermoplastischen Folie (2) und der mindestens einen Polyesterfolie (3) und/oder zwischen der mindestens einen thermoplastischen Schicht (4) und der Oberseite (1.2.1) der Innenscheibe (1.2) mindestens eine Funktionsschicht angeordnet ist.

7. Verbundscheibe (1) nach Anspruch 6, **dadurch gekennzeichnet, dass** die mindestens eine Funktionsschicht Radio-, IR- und/oder UV-Strahlung absorbiert und/oder elektrisch leitfähig und/oder gefärbt ist.

8. Verfahren zur Herstellung einer Verbundscheibe (1) gemäß einem der Ansprüche 1 bis 7, umfassend die folgenden Verfahrensschritte:
(a) Bereitstellen mindestens einer Innenscheibe (1.1) mit einer Oberseite (1.1.1),
(b) Bedecken der Oberseite (1.1.1) mit mindestens einer thermoplastischen Folie (4) bis zum Randbereich der späteren Verbundscheibe (1),
(c) vollständiges Bedecken der der Oberseite (1.1.1) gegenüberliegenden Oberfläche der thermoplastischen Folie (4) mit mindestens einer Polyesterfolie (3),
(d) vollständiges Bedecken der freien Oberfläche der mindestens einen Polyesterfolie (3) mit mindestens einer thermoplastischen Folie (2),
(e) vertikales Einschneiden der Folien (2) und (3) mit einer Schneidevorrichtung (5) im Abstand A zum Rand (4.1) der thermoplastischen Folie (4),
(f) Entfernen des Folienstreifens (2,3) der Breite A, so dass die Folien (2) und (3) eine gemeinsame Kante (6) bilden und eine freie horizontale Oberfläche (4.2) der Breite A der thermoplastischen Folie (4) freigelegt wird, und
(g) Aufpressen einer Außenscheibe (1.1) mit einem Druck D, wobei die Innenseite (1.1.1) mit der Oberseite der Folie (2) in Kontakt kommt und wobei der freie Raum zwischen der Kante (6), der Innenseite (1.1.1) und der Oberfläche (4.2) durch Einfließen des Materials von (4) in Richtung (7) aufgefüllt wird und die Verbundscheibe (1) resultiert.

9. Verfahren nach Anspruch 8, **dadurch gekennzeichnet, dass** das Aufpressen (g) bei höheren Temperaturen und unter Vakuum erfolgt.

10. Verwendung der Verbundscheibe (1) gemäß einem der Ansprüche 1 bis 7 und/oder der gemäß dem Verfahren 8 oder 9 hergestellten Verbundscheibe (1) als Windschutzscheibe, Seitenscheibe, Heckscheibe oder Dachscheibe von Fortbewegungsmitteln, bevorzugt als Dachscheibe von Fortbewegungsmitteln.

11. Verwendung nach Anspruch 10, **dadurch gekennzeichnet, dass** es sich bei den Fortbewegungsmitteln um Kraftfahrzeuge handelt.

## Claims

1. Laminated pane (1) comprising at least one multilayer laminated layer (2,3,4) between at least one outer pane (1.1) and at least one inner pane (1.2), **characterised in that** the at least one multilayer laminated layer (2,3,4) is a laminate, comprising
- at least one thermoplastic film (2) adhering to the inner face (1.1.1) of the at least one outer pane (1.1),
- at least one polyester film (3) adhering to the surface of the at least one thermoplastic film (2), which surface is opposite the inner face (1.1.1) of the at least one outer pane (1.1),
- at least one thermoplastic film (4) placed between the at least one polyester film (3) and the upper face (1.2.1) of the at least one inner pane (1.2), which upper face is opposite the inner face (1.1.1) of the at least one outer pane (1.1), wherein
- the thickness ratios of the films (2), (3) and (4) are set as follows:
- (2):(3) = (1:5) to (5:1) and
- (4):[(2) + (3)] = (25:1) to (2:1),
- the at least one thermoplastic film (2) and the at least one polyester film (3) have a common edge (6) which runs in parallel with or substantially in parallel with the edge (4.1) of the at least one thermoplastic film (4) at a distance A,
- in the direction (7), the material of the at least one thermoplastic film (4) fills the space between the edge (6), the inner face (1.1.1) of the outer pane (1.1) and the edge (4.1) of (4) located at a distance A from (6), and is fused with the material of the at least one thermoplastic film (2) such that (6) is isolated from the environment of the laminated pane (1),
- the at least one thermoplastic film (2) and the at least one thermoplastic film (4) are made of polyvinyl butyral (PVB),
- the at least one polyester film (3) is a polyethylene terephthalate film (PET) and
- the at least one PVB film (2) is free or substantially free of plasticisers.

2. Laminated pane (1) according to claim 1, **characterised in that** the at least one thermoplastic film (2) is 20 µm to 200 µm thick, the at least one polyester film (3) is 10 µm to 130 µm thick, and the at least one thermoplastic film (4) is 150 µm to 1000 µm thick.

3. Laminated pane (1) according to claim 1 or 2, **characterised in that** the at least one outer pane (1.1) and/or at least one inner pane (1.2) is or are made of a material selected from the group consisting of flat glass, float glass, quartz glass, borosilicate glass, soda lime glass, polycarbonate and polymethyl methacrylate, or **in that** they consist thereof.

4. Laminated pane (1) according to any of claims 1 to 3,
**characterised in that** the at least one first thermoplastic film (2) is 40 µm to 110 µm thick.

5. Laminated pane (1) according to any of claims 1 to 4,
**characterised in that** the at least one polyester film (3) is 10 µm to 130 µm thick.

6. Laminated pane (1) according to any of claims 1 to 5,
**characterised in that** at least one functional layer is arranged between the at least one thermoplastic film (2) and the at least one polyester film (3), and/or between the at least one thermoplastic film (4) and the upper face (1.2.1) of the inner pane (1.2).

7. Laminated pane (1) according to claim 6, **characterised in that** the at least one functional layer absorbs radio, IR and/or UV radiation and/or is electrically conductive and/or coloured.

8. Method for producing a laminated pane (1) according to any of claims 1 to 7, comprising the following method steps:
(a) providing at least one inner pane (1.1) having an upper face (1.1.1),
(b) covering the upper face (1.1.1) with at least one thermoplastic film (4) up to the edge region of the future laminated pane (1),
(c) completely covering the surface of the thermoplastic film (4), which surface is opposite the upper face (1.1.1), with at least one polyester film (3),
(d) completely covering the free surface of the at least one polyester film (3) with at least one thermoplastic film (2),
(e) vertically cutting the films (2) and (3) using a cutting device (5) at a distance A from the edge (4.1) of the thermoplastic film (4),
(f) removing the film strip (2,3) of width A, such that the films (2) and (3) form a common edge (6) and a free horizontal surface (4.2) of width A of the thermoplastic film (4) is exposed, and
(g) pressing an outer pane (1.1) using a pressure D, wherein the inner face (1.1.1) comes into contact with the upper face of the film (2) and wherein the free space between the edge (6), the inner face (1.1.1) and the surface (4.2) is filled by the inflow of material from (4) in direction (7), and the laminated pane (1) results therefrom.

9. Method according to claim 8, **characterised in that** the pressing (g) takes place at higher temperatures and in a vacuum.

10. Use of the laminated pane (1) according to any of claims 1 to 7 and/or the laminated pane (1) produced according to method 8 or 9, as a windscreen, side window, rear window or roof window of means of transport, preferably as a roof window of means of transport.

11. Use according to claim 10, **characterised in that** the means of transport are motor vehicles.

## Revendications

1. Vitrage feuilleté (1) comportant au moins une couche composite multicouche (2, 3, 4) entre au moins une vitre extérieure (1.1) et au moins une vitre intérieure (1.2), **caractérisé en ce que** l'au moins une couche composite multicouche (2, 3, 4) est un stratifié, comprenant
- au moins un film thermoplastique (2) adhérant à la face intérieure (1.1.1) de l'au moins une vitre extérieure (1.1),
- au moins un film polyester (3) adhérant à la surface de l'au moins un film thermoplastique (2) opposée à la face intérieure (1.1.1) de l'au moins une vitre extérieure (1.1),
- au moins un film thermoplastique (4) placé entre l'au moins un film polyester (3) et la face supérieure (1.2.1) de l'au moins une vitre intérieure (1.2) opposée à la face intérieure (1.1.1) de l'au moins une vitre extérieure (1.1), dans lequel
- les rapports d'épaisseur des films (2), (3) et (4) sont réglés comme suit :
- (2):(3) = (1:5) à (5:1) et
- (4):[(2) + (3)] = (25:1) à (2:1),
- l'au moins un film thermoplastique (2) et l'au moins un film polyester (3) possèdent un bord commun (6) qui s'étend à une distance A parallèlement ou sensiblement parallèlement au bord (4.1) de l'au moins un film thermoplastique (4),
- le matériau de l'au moins un film thermoplastique (4) remplit l'espace entre le bord (6), la face intérieure (1.1.1) de la vitre extérieure (1.1) et le bord (4.1) de (4) se trouvant à la distance A de (6) dans la direction (7) et est fusionné avec le matériau de l'au moins un film thermoplastique (2), de sorte que (6) est isolé de l'environnement du vitrage feuilleté (1),
- l'au moins un film thermoplastique (2) et l'au moins un film thermoplastique (4) sont constitués de polyvinylbutyral (PVB),
- l'au moins un film polyester (3) est un film en polyéthylène téréphtalate (PET), et
- l'au moins un film PVB (2) est exempt ou sensiblement exempt de plastifiants.

2. Vitrage feuilleté (1) selon la revendication 1, **caractérisé en ce que** l'au moins un film thermoplastique (2) a une épaisseur allant de 20 µm à 200 µm, l'au moins un film polyester (3) a une épaisseur allant de 10 µm à 130 µm et l'au moins un film thermoplastique (4) a une épaisseur allant de 150 µm à 1000 µm.

3. Vitrage feuilleté (1) selon la revendication 1 ou 2, **caractérisé en ce que** l'au moins une vitre extérieure (1.1) et/ou l'au moins une vitre intérieure (1.2) sont constituées d'un matériau choisi dans le groupe constitué de verre plat, verre flotté, verre de quartz, verre de borosilicate, verre de chaux sodée, polycarbonate et polyméthacrylate de méthyle, **ou en ce qu'**elles sont constituées de ceux-ci.

4. Vitrage feuilleté (1) selon l'une des revendications 1 à 3,
**caractérisé en ce que** l'au moins un premier film thermoplastique (2) a une épaisseur allant de 40 µm à 110 µm.

5. Vitrage feuilleté (1) selon l'une des revendications 1 à 4,
**caractérisé en ce que** l'au moins un film polyester (3) a une épaisseur allant de 10 µm à 130 µm.

6. Vitrage feuilleté (1) selon l'une des revendications 1 à 5,
**caractérisé en ce qu'**au moins une couche fonctionnelle est disposée entre l'au moins un film thermoplastique (2) et l'au moins un film polyester (3) et/ou entre l'au moins une couche thermoplastique (4) et la face supérieure (1.2.1) de la vitre intérieure (1.2).

7. Vitrage feuilleté (1) selon la revendication 6, **caractérisé en ce que** l'au moins une couche fonctionnelle absorbe les rayonnements radio, IR et/ou UV et/ou est électriquement conductrice et/ou colorée.

8. Procédé pour la fabrication d'un vitrage feuilleté (1) conformément à l'une des revendications 1 à 7, comprenant les étapes de procédé suivantes :
(a) fourniture d'au moins une vitre intérieure (1.1) comportant une face supérieure (1.1.1),
(b) revêtement de la face supérieure (1.1.1) d'au moins un film thermoplastique (4) jusqu'à la zone de bord du futur vitrage feuilleté (1),
(c) revêtement complet de la surface du film thermoplastique (4) opposée à la face supérieure (1.1.1) d'au moins un film polyester (3),
(d) revêtement complet de la surface libre de l'au moins un film polyester (3) d'au moins un film thermoplastique (2),
(e) coupe verticale des films (2) et (3) avec un dispositif de coupe (5) à la distance A par rapport au bord (4.1) du film thermoplastique (4),
(f) retrait de la bande de film (2, 3) de largeur A, de sorte que les films (2) et (3) forment un bord (6) commun et qu'une surface horizontale libre (4.2) de largeur A du film thermoplastique (4) est exposée, et
(g) pressage d'une vitre extérieure (1.1) avec une pression D, dans lequel la face intérieure (1.1.1) vient en contact avec la face supérieure du film (2) et dans lequel l'espace libre entre le bord (6), la face intérieure (1.1.1) et la surface (4.2) est rempli par écoulement du matériau de (4) dans la direction (7) et le vitrage feuilleté (1) en résulte.

9. Procédé selon la revendication 8, **caractérisé en ce que** le pressage (g) est effectué à des températures plus élevées et sous vide.

10. Utilisation du vitrage feuilleté (1) conformément à l'une des revendications 1 à 7 et/ou du vitrage feuilleté (1) fabriqué conformément au procédé 8 ou 9 comme pare-brise, vitre latérale, vitre arrière ou vitre de toit de moyens de déplacement, de préférence comme vitre de toit de moyens de déplacement.

11. Utilisation selon la revendication 10, **caractérisée en ce que** les moyens de déplacement sont des véhicules automobiles.
